# FASCICULE DE BREVET EUROPEEN

(11) **EP 3 105 174 B1**
(45) Date de publication et mention de la délivrance du brevet: **09.06.2021**
(21) Numéro de dépôt: 14712701.3
(22) Date de dépôt: 12.02.2014
(51) Int. Cl.: C04B 38/00, C04B 111/00, C04B 111/28, C01B 32/00

(54) **AÉROGEL COMPOSITE FLEXIBLE ET PROCÉDÉ DE FABRICATION**
FLEXIBLES VERBUNDAEROGEL UND VERFAHREN ZUR HERSTELLUNG DAVON
FLEXIBLE COMPOSITE AEROGEL AND PROCESS FOR PRODUCING SAME

(43) Date de publication de la demande: 21.12.2016
(73) Titulaire: Hutchinson, 75008 Paris (FR)
(72) Inventeur: SWOBODA, Benjamin, 78630 Orgeval (FR); HUILLET, Cédric, 45200 Montargis (FR); SONNTAG, Philippe, F-77210 Avon (FR); VAN EIBERGEN, Arthur, 45200 Montargis (FR)
(74) Mandataire: Croonenbroek, Thomas Jakob
(86) Numéro de dépôt international: PCT/FR2014/050268
(87) Numéro de publication internationale: WO 2015/121541

(56) Documents cités:
- EP-A1- 2 080 736
- WO-A1-94/22943
- WO-A1-99/38610
- US-A- 5 744 510
- US-A1- 2007 154 698
- BRUNO M M ET AL: "A novel way to maintain resorcinol-formaldehyde porosity during drying: Stabilization of the sol-gel nanostructure using a cationic polyelectrolyte", COLLOIDS AND SURFACES. A, PHYSICACHEMICAL AND ENGINEERING ASPECTS, ELSEVIER, AMSTERDAM, NL, vol. 362, no. 1-3, 5 juin 2010 (2010-06-05), pages 28-32, XP027046589, ISSN: 0927-7757 [extrait le 2010-05-12]
- PEKALA R W ET AL: "New organic aerogels based upon a phenolic-furfural reaction", JOURNAL OF NON-CRYSTALLINE SOLIDS, NORTH-HOLLAND PHYSICS PUBLISHING. AMSTERDAM, NL, vol. 188, no. 1-2, 1 juillet 1995 (1995-07-01), pages 34-40, XP004067973, ISSN: 0022-3093, DOI: 10.1016/0022-3093(95)00027-5
- GLORA M ET AL: "Integration of carbon aerogels in PEM fuel cells", JOURNAL OF NON-CRYSTALLINE SOLIDS, NORTH-HOLLAND PHYSICS PUBLISHING. AMSTERDAM, NL, vol. 285, no. 1-3, 1 juin 2001 (2001-06-01), pages 283-287, XP004242936, ISSN: 0022-3093, DOI: 10.1016/S0022-3093(01)00468-9
- MARINA SCHWAN ET AL: "Flexibilisation of resorcinol-formaldehyde aerogels", JOURNAL OF MATERIALS CHEMISTRY A, vol. 1, no. 43, 9 septembre 2013 (2013-09-09), page 13462, XP055149881, ISSN: 2050-7488, DOI: 10.1039/c3ta13172f
- BRUNO M M ET AL: "Characterization of monolithic porous carbon prepared from resorcinol/formaldehyde gels with cationic surfactant", COLLOIDS AND SURFACES. A, PHYSICACHEMICAL AND ENGINEERING ASPECTS, ELSEVIER, AMSTERDAM, NL, vol. 358, no. 1-3, 5 avril 2010 (2010-04-05), pages 13-20, XP026917493, ISSN: 0927-7757, DOI: 10.1016/J.COLSURFA.2010.01.017 [extrait le 2010-01-15]

## Description

La présente invention concerne le domaine de l'isolation thermique et plus particulièrement le domaine des aérogels composites flexible ainsi que leur procédé de fabrication.

Les aérogels sont utilisés de plus en plus dans le domaine de l'isolation thermique du fait de leur très faible conductivité thermique. Il est ainsi connu d'utiliser des aérogels organiques ou inorganiques en tant que matériau cœur dans des panneaux isolants sous vide.

Néanmoins, les aérogels sous forme monolithique sont rigides et relativement fragile. Ainsi, ces aérogels peuvent ne pas convenir pour des utilisations où une flexibilité et une certaine résistance est nécessaire.

Afin de conférer ces caractéristiques de résistance et de flexibilité, il est ainsi connu de fabriquer des aérogels composites flexibles, composés d'un aérogel organique ou inorganique au sein d'un renfort textile.

Cependant les aérogels utilisés dans l'art antérieur sont des aérogels à fort coût de production et difficiles à fabriquer car ils nécessitent une étape de séchage par CO₂ supercritique qui est longue et couteuse.

L'article « A novel way to maintain resorcinol-formaldehyde porosity during drying : Stabilization of the sol-gel nanostructure using a cationic polyelectrolyte » COLLOIDS AND SURFACES. A, PHYSICACHEMICAL AND ENGINEERING ASPECTS, ELSEVIER, AMSTERDAM, NL, vol. 362, no 1-3, 5 juin 2010 (2010-06-05), pages 28-32, XP027046589, montre un tel aérogel sous forme de pyrolysat par exemple.

Un des buts de la présente invention est donc de remédier au moins partiellement aux inconvénients de l'art antérieur et de proposer un aérogel composite flexible à faible cout de revient et dont la conductivité thermique est comprise entre 1 et 40 mW.m⁻¹.K⁻¹.

La présente invention concerne un aérogel organique composite flexible comportant :
- un renfort textile (5),
- un aérogel organique (3) placé au sein dudit renfort textile (5), ledit aérogel organique (3) étant à base d'une résine issue au moins en partie de monomère(s) polyhydroxybenzene(s) R choisis parmi les di- ou tri-hydroxybenzènes et d'un monomère formaldéhyde F, ledit aérogel organique (3) étant un gel polymérique organique comprenant au moins un polyélectrolyte cationique hydrosoluble P, ledit aérogel organique 2. (3) présentant une conductivité thermique spécifique comprise entre 10 et 40 mW.m⁻¹.K⁻¹ à la pression atmosphérique, l'aérogel organique (3) comprenant le produit d'une réaction de polymérisation dans un solvant aqueux W des polyhydroxybenzène(s) R et du formaldéhyde F, en présence du au moins un polyélectrolyte cationique hydrosoluble P dissous dans ledit solvant aqueux et d'un catalyseur, et dans laquelle le produit de la réaction de polymérisation comprend ledit au moins un polyélectrolyte cationique hydrosoluble P selon une fraction massique comprise entre 0,2 % et 2%.

Selon un aspect de l'invention, ledit au moins un polyélectrolyte cationique hydrosoluble P est un polymère organique choisi dans le groupe constitué par les sels d'ammonium quaternaire, le poly(chlorure de vinylpyridinium), la poly(éthylène imine), la poly(vinyl pyridine), le poly(chlorhydrate d'allylamine), le poly(chlorure de triméthylammonium éthylméthacrylate), le poly(acrylamide-co-chlorure de diméthylammonium) et leurs mélanges.

Selon un autre aspect de l'invention, ledit au moins un polyélectrolyte cationique hydrosoluble P est un sel comportant des unités issues d'un ammonium quaternaire choisi parmi les poly(halogénure de diallyldiméthylammonium) et est de préférence le poly(chlorure de diallyldiméthylammonium) ou le poly(bromure de diallyldiméthylammonium).

L'aérogel organique comprend le produit d'une réaction de polymérisation dans un solvant aqueux W des polyhydroxybenzène(s) R et formaldéhyde(s) F, en présence du au moins un polyélectrolyte cationique hydrosoluble P dissous dans ledit solvant aqueux et d'un catalyseur.

Ledit produit de la réaction de polymérisation comprend ledit au moins un polyélectrolyte cationique hydrosoluble P selon une fraction massique comprise entre 0,2 % et 2 %.

Selon un autre aspect de l'invention, ledit produit de la réaction de polymérisation comprend ledit au moins un polyélectrolyte cationique hydrosoluble P selon un ratio massique P/(R+F) par rapport auxdits polyhydroxybenzène(s) R et formaldéhyde(s) F, qui est compris entre 2 % et 10 %.

Selon un autre aspect de l'invention, ledit produit de la réaction de polymérisation comprend ledit au moins un polyélectrolyte cationique hydrosoluble P selon un ratio massique P/(R+F+W) par rapport auxdits polyhydroxybenzène(s) R, formaldéhyde(s) F et solvant aqueux W, qui est compris entre 0,3 % et 2 %.

Selon un autre aspect de l'invention, l'aérogel organique présente :
- une surface spécifique comprise entre 400 m²/g et 1200 m²/g, et/ou
- un volume poreux compris entre 0,1 cm³/g et 3 cm³/g, et/ou
- un diamètre moyen de pores compris entre 3 nm et 30 nm, et/ou
- une densité comprise entre 0,01 et 0,4.

Selon un autre aspect de l'invention, l'aérogel organique est un gel polymérique organique comprenant au moins un polyélectrolyte cationique hydrosoluble P, le renfort textile est réalisé au moyen de fibres ou filaments organiques ayant un taux de reprise en humidité supérieur ou égal à 5% et ayant une bonne affinité chimique pour ledit aérogel organique.

Selon un autre aspect de l'invention, les fibres ou filaments organiques du renfort textile 5 sont choisis parmi les matériaux suivant :
- fibre méta-aramide,
- fibre polyacrylonitrile oxydé,
- fibre polyamide imide,
- fibre phenolique,
- fibre polybenzimidazole,
- fibre polysulfonamide.

Selon un autre aspect de l'invention, les fibres ou filaments inorganiques du renfort textile 5 sont choisis parmi les matériaux suivant :
- fibre de verre,
- fibre de basalte,
- fibre céramique,
- fibre de silice,
- fibre carbure de silicium.

Selon un autre aspect de l'invention, le renfort textile est un textile non tissé.

Selon un autre aspect de l'invention, le renfort textile est un textile tissé ou tricoté.

Selon un autre aspect de l'invention, le renfort textile (5) est un textile en trois dimensions.

La présente invention concerne également un procédé de fabrication d'un aérogel organique composite flexible comportant les étapes suivantes :
a) une polymérisation dans un solvant aqueux W de polyhydroxybenzène(s) R choisis parmi les di- ou tri-hydroxybenzènes et formaldéhyde(s) F, en présence d'au moins un polyélectrolyte cationique P dissous dans ledit solvant aqueux W et d'un catalyseur, au sein d'un renfort textile en utilisant ledit polyélectrolyte cationique P selon une fraction massique dans la composition comprise entre 0,2 % et 2 %,
b) une gélification de la solution obtenue en a) au sein du renfort textile pour l'obtention d'un gel,
c) un séchage du renfort textile imbibé du gel obtenu en b).

Selon un autre aspect du procédé selon l'invention, l'étape a) est réalisée en utilisant ledit au moins un polyélectrolyte cationique hydrosoluble P :
- selon un ratio massique P/(R+F) par rapport auxdits polyhydroxybenzène(s) R et formaldéhyde(s) F, compris entre 2 % et 10 %, et/ou
- selon un ratio massique P/(R+F+W) par rapport auxdits polyhydroxybenzène(s) R, formaldéhyde(s) F et solvant aqueux W, compris entre 0,3 % et 2 %.

Selon un autre aspect du procédé selon l'invention,
- l'étape a) est réalisée à température ambiante, en dissolvant le(s)dit(s) polyhydroxybenzène(s) R et ledit au moins un polyélectrolyte cationique hydrosoluble P dans ledit solvant aqueux W, de préférence constitué d'eau, puis en ajoutant à la dissolution obtenue le(s)dit(s) formaldéhyde(s) F et ledit catalyseur acide ou basique, avant de verser la solution obtenue sur le renfort textile, et que
- l'étape b) est réalisée par cuisson dans un four dudit renfort textile imbibé.

Selon un autre aspect du procédé selon l'invention, l'étape c) est réalisée par un séchage à l'air, par exemple dans une étuve, pour l'obtention dudit gel polymérique organique présentant :
- une surface spécifique comprise entre 400 m²/g et 1200 m²/g, et/ou
- un volume poreux compris entre 0,1 cm³/g et 3 cm³/g, et/ou
- un diamètre moyen de pores compris entre 3 nm et 30 nm, et/ou une densité comprise entre 0,01 et 0,4.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique en vue de profil en coupe d'un aérogel organique composite flexible,
- la figure 2 montre une photo en vue de profil d'un renfort textile trois dimensions.

Les éléments identiques sur les différentes figures, portent les mêmes références.

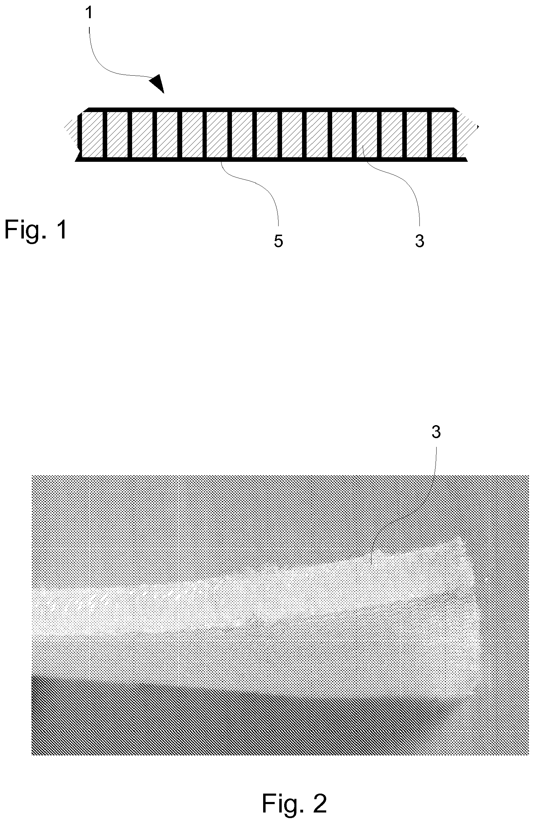

Comme illustré à la figure 1, l'aérogel organique composite flexible 1 comporte notamment un renfort textile 5 et un aérogel organique 3 au sein dudit renfort textile 5.

Ledit aérogel organique 3 peut notamment être un gel polymérique organique ou un pyrolysat dudit gel sous forme d'un monolithe de carbone poreux super isolant thermique (i.e. de conductivité thermique inférieure ou égale à 40 mW.m⁻¹.K⁻¹).

Cet aérogel organique 3 est obtenue par le fait que la Demanderesse vient de découvrir d'une manière surprenante que l'ajout en phase aqueuse, à des précurseurs d'une résine de type polyhydroxybenzène et de formaldéhyde, d'une famille d'additifs particulière constituée d'un polyélectrolyte cationique hydrosoluble, permet d'obtenir un gel ou son pyrolysat qui présente à la fois une haute surface spécifique, une très basse densité et un volume poreux élevé, en pouvant se passer d'un séchage par échange de solvant et par fluide supercritique.

A cet effet, l'aérogel organique 3 est à base d'une résine issue au moins en partie de polyhydroxybenzène(s) R et de formaldéhyde(s) F, est tel qu'il comprend au moins un polyélectrolyte cationique hydrosoluble P.

On notera que cet aérogel incorporant ce polyélectrolyte cationique peut être avantageusement obtenue en utilisant un séchage en étuve bien plus simple à mettre en œuvre et pénalisant moins le coût de production du gel que le séchage par CO₂ supercritique. En effet, la Demanderesse a découvert que cet additif permet de conserver la forte porosité du gel obtenu suite à ce séchage en étuve et de lui conférer une très faible densité alliée à une surface spécifique et un volume poreux élevés.

Par « gel », on entend de manière connue le mélange d'une matière colloïdale et d'un liquide, qui se forme spontanément ou sous l'action d'un catalyseur par la floculation et la coagulation d'une solution colloïdale.

Par « polymère hydrosoluble », on entend un polymère qui peut être solubilisé dans l'eau sans adjonction d'additifs (de tensioactifs notamment), à la différence d'un polymère hydrodispersable qui est susceptible de former une dispersion lorsqu'il est mélangé à de l'eau.

L'aérogel organique 3 peut également comprendre le produit d'une réaction de polymérisation dans un solvant aqueux W desdits polyhydroxybenzène(s) R et formaldéhyde(s) F, en présence dudit au moins un polyélectrolyte cationique P dissous dans ce solvant et d'un catalyseur acide ou basique.

Avantageusement, ledit produit de la réaction de polymérisation peut comprendre :
- ledit au moins un polyélectrolyte cationique P selon une fraction massique très réduite qui est comprise entre 0,2 % et 2 % et de préférence entre 0,3 % et 1 %, et/ou
- ledit au moins un polyélectrolyte cationique P selon un ratio massique P/(R+F) par rapport auxdits polyhydroxybenzène(s) R et formaldéhyde(s) F, qui est compris entre 2 % et 10 % et de préférence entre 3 % et 7 %, et/ou
- ledit au moins un polyélectrolyte cationique P selon un ratio massique P/(R+F+W) par rapport auxdits polyhydroxybenzène(s) R, formaldéhyde(s) F et solvant aqueux W, qui est compris entre 0,3 % et 2 % et de préférence entre 0,4 % et 1,5 %.

Ledit au moins un polyélectrolyte peut être tout polyélectrolyte cationique totalement soluble dans l'eau et de force ionique faible.

De préférence, il s'agit d'un polymère organique choisi dans le groupe constitué par les sels d'ammonium quaternaire, le poly(chlorure de vinylpyridinium), la poly(éthylène imine), la poly(vinyl pyridine), le poly(chlorhydrate d'allylamine), le poly(chlorure de triméthylammonium éthylméthacrylate), le poly(acrylamide-co-chlorure de diméthylammonium) et leurs mélanges.

A titre encore plus préférentiel, ledit au moins un polyélectrolyte cationique hydrosoluble est un sel comportant des unités issues d'un ammonium quaternaire choisi parmi les poly(halogénure de diallyldiméthylammonium) et est de préférence le poly(chlorure de diallyldiméthylammonium) ou le poly(bromure de diallyldiméthylammonium).

Les polymères précurseurs de ladite résine utilisés dans la présente invention, résultent de la polycondensation d'au moins un monomère du type polyhydroxybenzène R choisis parmi les di- et tri- hydroxybenzènes et d'au moins un monomère formaldéhyde F. Cette réaction de polymérisation peut impliquer plus de deux monomères distincts, les monomères additionnels étant du type polyhydroxybenzène ou non. Les polyhydroxybenzènes utilisables sont préférentiellement des di- ou des tri- hydroxybenzènes, et avantageusement le résorcinol (1,3-di hydroxybenzène) ou le mélange du résorcinol avec un autre composé choisi parmi le catéchol, l'hydroquinone, le phloroglucinol.

On peut par exemple utiliser les polyhydroxybenzène(s) R et formaldéhyde(s) F suivant un rapport molaire R/F compris entre 0.2 et 1.

L'aérogel organique 3 peut avantageusement présenter une surface spécifique comprise entre 400 m²/g et 1200 m²/g, et/ou un volume poreux compris entre 0,1 cm³/g et 3 cm³/g, et/ou un diamètre moyen de pores compris entre 3 nm et 30 nm, et/ou une densité comprise entre 0,01 et 0,4.

Avantageusement, l'aérogel organique 3 peut présenter une conductivité thermique comprise entre 10 mW.m⁻¹.K⁻¹ et 40 mW.m⁻¹.K⁻¹ et par exemple comprise entre 12 et 35 mW.m⁻¹.K⁻¹ à la pression atmosphérique.

Le renfort textile 5 peut, quant à elle, être un textile non tissé ou être un textile tissé ou tricoté et préférentiellement un textile trois dimensions non tissé, tissé ou tricoté comme par exemple un tissu ou tricot trois dimensions, comme représenté sur les figures 1 et 2.

Par textile trois dimensions, on entend un textile qui présente une troisième dimension par rapport aux deux autres dimensions planaires usuelles. Ce textile peut être réalisé par tissage, tricotage (chaine ou trame), couturage, tressage ou encore par une combinaison de ces techniques.

L'utilisation de tels renforts textiles 5 apporte le caractère flexible à l'aérogel organique composite flexible 1.

Le choix du matériau dans lequel est réalisé le renfort textile 5 est fonction des conditions d'utilisation de l'aérogel organique composite flexible 1 et de la nature de l'aérogel organique 3.

En effet, dans le cas ou l'aérogel organique 3 au sein du renfort textile 5 est un gel polymérique organique comme décrit si dessus, il sera préférentiellement utilisé à des températures inférieures ou égales à 200°C. Ainsi, le renfort textile 5 peut être réalisé au moyen de fibres ou filaments organiques ayant un taux de reprise en humidité supérieur ou égal à 5% (déterminé dans les conditions de la norme ISO 3344). Le fait que ces fibres ou filaments aient une forte reprise en humidité permet une mouillabilité (et donc une imprégnation) importante de la solution sur le renfort textile. De plus, les fibres ou filaments organiques sont préférentiellement choisie pour avoir une bonne affinité chimique pour le gel polymérique organique (polyhydroxybenzène(s) R et de formaldéhyde(s) F) ainsi une réaction chimique a lieu entre une faible partie des réactifs R et F lors de la gélification. Ce phénomène permet d'avoir une adhésion importante entre le renfort textile 5 et l'aérogel 3 final et ainsi limite la perte de gel par poudrage lors d'une flexion.

Les fibres ou filaments organiques du renfort textile 5 peuvent ainsi être choisis parmi les matériaux suivant :
- fibre méta-aramide,
- fibre polyacrylonitrile oxydé,
- fibre polyamide imide,
- fibre phenolique,
- fibre polybenzimidazole,
- fibre polysulfonamide.

Dans le cas ou l'aérogel organique 3 au sein du renfort textile 5 est un pyrolysat du gel sous forme d'un monolithe de carbone poreux comme décrit si dessus, il sera préférentiellement utilisé à des températures inférieures ou égales à 400°C. Néanmoins, le renfort textile 5 doit être réalisé au moyen de fibres ou filaments inorganiques résistant à la température de pyrolyse, qui est ici de l'ordre de 800°C.

Les fibres ou filaments inorganiques du renfort textile 5 peuvent ainsi être choisis parmi les matériaux suivant :
- fibre de verre,
- fibre de basalte,
- fibre céramique (par exemple alumine, Aluminosilicate, borosilicaluminate),
- fibre de silice,
- fibre carbure de silicium.

Selon un mode de réalisation préféré, le renfort textile 5 est un textile trois dimensions non tissé, tissé ou tricoté comme par exemple un tissu ou tricot trois dimensions comme illustré sur la figure 2. L'intérêt de ce type de textile et de fournir un textile d'une certaine épaisseur qui possède des propriétés mécaniques supérieures à un simple textile non tissé aiguilleté à matière équivalente et qui permet d'obtenir un aérogel organique composite flexible et manipulable avec peu de pertes d'aérogel par poudrage.

Cela permet tout particulièrement dans le cas de fibres ou filaments inorganiques, d'éviter une perte trop marquée en poudrage malgré la faible mouillabilité des fibres ou filaments. Le textile trois dimensions sert alors « d'enveloppe » à l'aérogel organique.

Essai réalisé entre un renfort textile 5 non tissé et un tricot 3D :

### Non tissé Airtech: Airweave® UHT 800

Non tissé aiguilleté fabriqué à partir de fibres de verre.
- Poids au m² mesuré : 636.3 g/m²
- épaisseur 5 mm
- Densité : 127.26 kg/m³

### Tricot 3D « chaîne » fabriqué à partir de fibres de verre.

- Poids au m² mesuré : 1059 g/m²
- épaisseur 5 mm
- Densité : 211.84 kg/m³

Essai de traction sur Tricot 3D/Non tissé :

| **Non tissé Fibres de verre Etat initial** | **Résultats** | **Force max (N)** | **Allongement à F max (%)** |
|---|---|---|---|
| Sens production | **Moyenne** | **49.58** | **38.63** |
| | Ecart type | 2.84 | 1.78 |
| Sens travers | **Moyenne** | **26.74** | **20.83** |
| | Ecart type | 2.65 | 3.42 |

| **Tricot 3D Etat initial** | **Résultats** | **Force max (N)** | **Allongement à F max (%)** |
|---|---|---|---|
| Sens colonnes | **Moyenne** | **236.60** | **32.63** |
| | Ecart type | 20.70 | 0.48 |
| Sens rangées | **Moyenne** | **165.80** | **62.53** |
| | Ecart type | / | / |

Comparativement, on note de meilleures propriétés de déformation et de résistance avec le tricot 3D par rapport au non tissé du fait que le tricot 3D a une meilleur élasticité dans son le sens de ses rangées du fait qu'il est constitué de mailles.

La présente invention concerne également un procédé de fabrication d'un aérogel organique composite flexible 1 comprenant les étapes suivante :
a) une polymérisation dans un solvant aqueux W de polyhydroxybenzène(s) R et formaldéhyde(s) F, en présence d'au moins un polyélectrolyte cationique P dissous dans ledit solvant aqueux W et d'un catalyseur, au sein d'un renfort textile 5,
b) une gélification de la solution obtenue en a) au sein du renfort textile 5 pour l'obtention d'un gel,
c) un séchage du renfort textile 5 imbibée du gel obtenu en b).

L'on obtient alors un aérogel organique composite flexible 1 dont l'aérogel organique 3 est sous forme d'un gel polymérique organique.

La préparation de l'aérogel organique composite flexible 1 peut également comporter une étape supplémentaire d) de pyrolyse du gel séché obtenu en c) pour l'obtention d'un carbone poreux.

L'on obtient alors un aérogel organique composite flexible 1 dont l'aérogel organique 3 est sous forme d'un carbone poreux.

Avantageusement et comme indiqué ci-dessus, l'on peut mettre en œuvre l'étape a) en utilisant ledit au moins un polyélectrolyte P selon une fraction massique dans la composition comprise entre 0,2 % et 2 %, et/ou selon un ratio massique P/(R+F) compris entre 2 % et 10 %, et/ou selon un ratio massique P/(R+F+W) compris entre 0,3 % et 2 %.

Egalement avantageusement, l'on peut mettre en œuvre :
- l'étape a) à température ambiante, en dissolvant le(s)dit(s) polyhydroxybenzène(s) R et ledit au moins un polyélectrolyte cationique P dans ledit solvant aqueux, de préférence constitué d'eau, puis en ajoutant à la dissolution obtenue le(s)dit(s) formaldéhyde(s) F et ledit catalyseur qui peut être acide ou basique, avant de verser la solution obtenue sur un renfort textile comme décrit plus haut, puis
- l'étape b) par cuisson dans un four dudit renfort textile imbibé.

A titre de catalyseur utilisable à l'étape a), on peut par exemple citer des catalyseurs acides tels que des solutions aqueuses d'acide chlorhydrique, sulfurique, nitrique, acétique, phosphorique, trifluoroacétique, trifluorométhanesulfonique, perchlorique, oxalique, toluènesulfonique, dichloroacétique, formique, ou bien des catalyseurs basiques tels que le carbonate de sodium, l'hydrogénocarbonate de sodium, le carbonate de potassium, le carbonate d'ammonium, le carbonate de lithium, l'ammoniaque, l'hydroxyde de potassium et l'hydroxyde de sodium.

On peut par exemple utiliser à l'étape a) un rapport massique R/W entre polyhydroxybenzène(s) et eau compris entre 0,001 et 0,3.

De préférence, on met en œuvre l'étape c) par un séchage à l'air par exemple dans une étuve, sans échange de solvant ni séchage par fluide supercritique, pour l'obtention dudit gel polymérique organique qui présente (suivant les conditions de synthèse et notamment le pH) une surface spécifique comprise entre 400 m²/g et 1200 m²/g, et/ou un volume poreux compris entre 0,1 cm³/g et 3 cm³/g, et/ou un diamètre moyen de pores compris entre 3 nm et 30 nm, et/ou une densité comprise entre 0,01 et 0,4.

On notera que ce procédé de préparation en phase aqueuse selon l'invention permet ainsi d'obtenir des structures poreuses contrôlées qui varient en fonction des conditions de synthèse. Il est ainsi possible d'obtenir une structure de faible densité uniquement nanoporeuse (i.e. avec un diamètre de pores inférieur à 50 nm), ou bien avec une coexistence entre des nano- et des macropores (i.e. avec un diamètre de pores supérieur à 50 nm).

D'autres caractéristiques, avantages et détails ressortiront à la lecture de la description suivante de plusieurs exemples de réalisation de l'invention, donnés à titre illustratif et non limitatif.

### Exemples de préparation de l'aérogel organique 3 :

Les exemples qui suivent illustrent la préparation de deux gels organiques « témoin » G0 et G0', de cinq gels organiques selon l'invention G1 à G5 et des carbones poreux correspondants « témoin » C0, C0' et selon l'invention C1 à C5, avec pour réactifs de départ :
- le résorcinol (R) de chez Acros Organics®, pur à 98 %,
- le formaldéhyde (F) de chez Acros Organics®, pur à 37 %,
- un catalyseur (C) constitué d'acide chlorhydrique pour les gels G1 à G4 et de carbonate de sodium pour le gel G5, et
- le poly(chlorure de diallyldiméthylammonium) (P), pur à 35 % (en solution dans l'eau W), pour les gels G1 à G5.

On a préparé ces gels G0, G0' et G1 à G5 comme suit :
On a dans un premier temps dissous dans un récipient contenant de l'eau le résorcinol R, et le polyélectrolyte P (à l'exception des gels G0 et G0'). Puis après totale dissolution, on a ajouté le formaldéhyde F. On a ajusté au pH approprié la solution polymérique obtenue avec le catalyseur C, étant précisé que l'on a réalisé l'ensemble de ces opérations à température ambiante (à environ 22° C). On a dans un second temps transvasé la solution obtenue dans des moules en Téflon®, que l'on a ensuite placés dans un four à 90° C pendant 24 h pour effectuer la gélification.

On a ensuite procédé au séchage du gel :
- en enceinte humide à 85° C avec un taux d'humidité de 90% pendant 17 heures, pour obtenir les gels G0', G2, G4 et G5, ou
- par CO₂ supercritique après échange de solvant en bain d'acide trifluoroacétique pendant 3 jours puis en bain d'éthanol absolu pendant 4 jours, pour obtenir les aérogels G0, G1 et G3.

On a enfin pyrolysé sous azote les gels organiques G0, G0' et G1 à G5 à une température de 800° C, pour l'obtention des carbones poreux C0, C0' et C1 à C5.

Dans le tableau 1 ci-après :
- R/F est le rapport molaire entre résorcinol et formaldéhyde,
- R/W est le rapport massique entre résorcinol et eau,
- P désigne la fraction massique de polyélectrolyte,
- P/(R+F) est le rapport massique entre le polyélectrolyte et les précurseurs résorcinol-formaldéhyde,
- P/(R+F+W) est le rapport massique entre le polyélectrolyte et les précurseurs résorcinol-formaldéhyde additionnés de l'eau, et
- CO₂ sc désigne un séchage utilisant du CO₂ supercritique, par opposition au séchage en étuve utilisable selon l'invention.

On a mesuré la conductivité thermique des gels G0, G2, G4 (voir tableau 2) et des carbones poreux C0, C2, C4 (voir tableau 3) à 22° C avec un conductivimètre de Neotim® selon la technique du fil chaud, et l'on a mesuré les propriétés mécaniques en compression trois points et en traction du gel G4 et du carbone poreux correspondant C4 en comparaison de celles d'un aérogel de silice « témoin » G0" (voir tableau 4) avec un banc de traction/compression MTS selon la norme ASTM C165-07.

On a mesuré (tableau 2) pour chaque carbone poreux C0, C0' et C1 à C5 les surfaces spécifiques, les volumes poreux et les diamètres moyens de pores, au moyen de l'appareil TRISTAR® 3020 de Micromeritics.

**Tableau 1 :**

| Quantités de réactifs/procé dé | G0 | G0' | **G1** | **G2** | **G3** | **G4** | **G5** |
|---|---|---|---|---|---|---|---|
| R/F | 0,5 | 0,5 | 0,5 | 0,5 | 0,5 | 0,5 | 0,5 |
| R/W | 0,03 | 0,03 | 0,03 | 0,03 | 0,03 | 0,03 | 0,20 |
| P | 0 | 0 | 0,4 % | 0,4 % | 0,4 % | 0,4 % | - |
| P/(R+F) | 0 | 0 | 0,0626 | 0,062 6 | 0,0640 | 0,064 0 | 0,037 9 |
| P/(R+F+W) | 0 | 0 | 0,0044 | 0,004 4 | 0,0070 | 0,007 0 | 0,012 7 |
| pH | 3 | 3 | 3 | 3 | 1 | 1 | 6,13 |
| Méthode de séchage | CO₂ sc | étuve | CO₂ sc | étuve | CO₂ sc | étuve | étuve |

**Tableau 2 :**

| Gel organique | G0 | G0' | **G1** | **G2** | **G3** | **G4** | **G5** |
|---|---|---|---|---|---|---|---|
| Densité du gel | 0,40 | 1 | 0,20 | 0,40 | 0,04 | 0,04 | 0,20 |
| Conductivité thermique du gel (mW/mK) | 24 | - | - | 26 | - | 24 | - |

**Tableau 3 :**

| Carbone poreux | C0 | C0' | **C1** | **C2** | **C3** | **C4** | **C5** |
|---|---|---|---|---|---|---|---|
| Surface spécifique du carbone (m²/g) | 983 | 18 | 1014 | 1080 | 769 | 1170 | 670 |
| Volume poreux (cm³/g) du carbone | 0,58 | 0,01 2 | 0,87 | 0,95 | 0,32 | 0,47 | 0,26 |
| Diamètre moyen de pores (nm) du carbone | 3,6 | - | 10 | 10 | 5,4 | 4,1 | 3,9 |
| Densité du carbone | 0,40 | 0,90 | 0,20 | 0,40 | 0,04 | 0,06 | 0,20 |
| Conductivité thermique (mW/mK) du carbone | 30 | - | - | 33 | - | 29 | - |

La comparaison des carbones poreux « témoin » C0 et C0' avec ceux de l'invention C1 à C5 montre clairement que l'ajout du polyélectrolyte cationique P permet de maintenir, pour une faible densité obtenue, une structure nanométrique même avec un séchage en étuve (voir les valeurs de surface spécifique, de volume poreux et de diamètre moyen de pores des carbones poreux C2, C4, C5 qui sont du même ordre que celles de C0), alors que sans ce polyélectrolyte l'utilisation d'un séchage par CO₂ supercritique est nécessaire pour conserver cette nanostructure du carbone poreux C0.

Dans ces conditions, les densités des gels G1 à G5 et des carbones C1 à C5 nanostructurés selon l'invention sont toujours inférieures ou égales à 0,4.

En ajustant le pH à 1, ces résultats montrent également qu'il est possible d'obtenir un matériau (voir les gels G3 et G4 et les carbones C3 et C4 de l'invention) avec des densités beaucoup plus faibles (inférieures ou égales à 0,06).

Enfin, les résultats obtenus pour le gel G5 et le carbone correspondant C5 de l'invention montrent que la synthèse peut également être réalisée en milieu moins acide et même légèrement basique (pH > 6).

**Tableau 4 :**

| Structure du gel ou du carbone | Aérogel de silice* G0" | Gel G4 | Carbone poreux C4 |
|---|---|---|---|
| Densité | 0,1* | 0,04 | 0,06 |
| Module de compression (MPa) | 55* | 800 | 1050 |
| Résistance rupture (MPa) | 4* | 25 | 20 |

| | | | |
|---|---|---|---|
| * selon MA Aegerter, et al. "Aerogel Handbook" Advanced in sol gel derived materials and technologies, chap 22. | | | |

Ce tableau 4 montre que les gels et carbone poreux selon l'invention présentent des propriétés mécaniques très nettement améliorées par rapport à celles d'un aérogel de silice connu.

Ainsi, on voit bien que l'aérogel organique composite flexible 1 selon l'invention permet, du fait que l'aérogel organique 3, placé au sein du renfort textile 5, est un aérogel particulier, conductivité thermique faible tout en étant flexible et résistant et ce pour un coût de productions raisonnable du fait que l'aérogel organique particulier ne nécessite pas d'étape de séchage supercritique.

## Revendications

1. Aérogel organique composite flexible (1) comportant :
- un renfort textile (5),
- un aérogel organique (3) placé au sein dudit renfort textile (5),
**caractérisé en ce que** ledit aérogel organique (3) est à base d'une résine issue au moins en partie de monomère(s) polyhydroxybenzène(s) R choisis parmi les di- ou tri-hydroxybenzènes et d'un monomère formaldéhyde F,
ledit aérogel organique (3) étant un gel polymérique organique comprenant au moins un polyélectrolyte cationique hydrosoluble P,
ledit aérogel organique (3) présentant une conductivité thermique spécifique comprise entre 10 et 40 mW.m⁻¹.K⁻¹ à la pression atmosphérique,
l'aérogel organique (3) comprenant le produit d'une réaction de polymérisation dans un solvant aqueux W des polyhydroxybenzène(s) R et du formaldéhyde F, en présence du au moins un polyélectrolyte cationique hydrosoluble P dissous dans ledit solvant aqueux et d'un catalyseur, et dans laquelle le produit de la réaction de polymérisation comprend ledit au moins un polyélectrolyte cationique hydrosoluble P selon une fraction massique comprise entre 0,2 % et 2 %.

2. Aérogel organique composite flexible (1) selon la revendication 1, **caractérisée en ce que** l'aérogel organique (3) présente une densité comprise entre 0,01 et 0,4.

3. Aérogel organique composite flexible (1) selon l'une quelconque des revendications 1 à 2, **caractérisée en ce que** ledit au moins un polyélectrolyte cationique hydrosoluble P est un polymère organique choisi dans le groupe constitué par les sels d'ammonium quaternaire, le poly(chlorure de vinylpyridinium), la poly(éthylène imine), la poly(vinyl pyridine), le poly(chlorhydrate d'allylamine), le poly(chlorure de triméthylammonium éthylméthacrylate), le poly(acrylamide-co-chlorure de diméthylammonium) et leurs mélanges.

4. Aérogel organique composite flexible (1) selon la revendication précédente, **caractérisée en ce que** ledit au moins un polyélectrolyte cationique hydrosoluble P est un sel comportant des unités issues d'un ammonium quaternaire choisi parmi les poly(halogénure de diallyldiméthylammonium) et est de préférence le poly(chlorure de diallyldiméthylammonium) ou le poly(bromure de diallyldiméthylammonium).

5. Aérogel organique composite flexible (1) selon l'une quelconque des revendications 1 à 4 , **caractérisée en ce que** ledit produit de la réaction de polymérisation comprend ledit au moins un polyélectrolyte cationique hydrosoluble P selon un ratio massique P/(R+F) par rapport auxdits polyhydroxybenzène(s) R et formaldéhyde F, qui est compris entre 2 % et 10 %.

6. Aérogel organique composite flexible (1) selon l'une quelconque des revendications 1 à 5 , **caractérisée en ce que** ledit produit de la réaction de polymérisation comprend ledit au moins un polyélectrolyte cationique hydrosoluble P selon un ratio massique P/(R+F+W) par rapport auxdits polyhydroxybenzène(s) R, formaldéhyde F et solvant aqueux W, qui est compris entre 0,3 % et 2 %.

7. Aérogel organique composite flexible (1) selon une quelconque des revendications précédentes, **caractérisée en ce que** l'aérogel organique (3) présente :
- une surface spécifique comprise entre 400 m²/g et 1200 m²/g, et/ou
- un volume poreux compris entre 0,1 cm³/g et 3 cm³/g, et/ou
- un diamètre moyen de pores compris entre 3 nm et 30 nm.

8. Aérogel organique composite flexible (1) selon l'une quelconque des revendications précédentes, **caractérisé en ce que**, lorsque l'aérogel organique (3) est un gel polymérique organique comprenant au moins un polyélectrolyte cationique hydrosoluble P, le renfort textile (5) est réalisé au moyen de fibres organiques ayant un taux de reprise en humidité supérieur ou égal à 5% et ayant une bonne affinité chimique pour ledit aérogel organique (3).

9. Aérogel organique composite flexible (1) selon la revendication précédente, **caractérisé en ce que** les fibres ou filaments organiques du renfort textile (5) sont choisis parmi les matériaux suivant :
- fibre méta-aramide,
- fibre polyacrylonitrile oxydé,
- fibre polyamide imide,
- fibre phenolique,
- fibre polybenzimidazole,
- fibre polysulfonamide.

10. Aérogel organique composite flexible (1) selon la revendication 8, **caractérisé en ce que** les fibres ou filaments inorganiques du renfort textile 5 sont choisis parmi les matériaux suivant :
- fibre de verre,
- fibre de basalte,
- fibre céramique,
- fibre de silice,
- fibre carbure de silicium.

11. Aérogel organique composite flexible (1) selon l'une des revendications 8 à 10, **caractérisé en ce que** le renfort textile (5) est un textile non tissé.

12. Aérogel organique composite flexible (1) selon l'une des revendications 8 à 10, **caractérisé en ce que** le renfort textile (5) est un textile tissé.

13. Aérogel organique composite flexible (1) selon l'une des revendications 8 à 12, **caractérisé en ce que** le renfort textile (5) est un textile en trois dimensions.

14. Procédé de fabrication d'un aérogel organique composite flexible (1) **caractérisé en ce qu'**il comporte les étapes suivantes :
a) une polymérisation dans un solvant aqueux W de monomère(s) polyhydroxybenzène(s) R choisis parmi les di- ou tri-hydroxybenzènes et formaldéhyde F, en présence d'au moins un polyélectrolyte cationique P dissous dans ledit solvant aqueux W et d'un catalyseur, au sein d'un renfort textile (5), en utilisant ledit polyélectrolyte cationique P selon une fraction massique dans la composition comprise entre 0,2 % et 2 %,
b) une gélification de la solution obtenue en a) au sein du renfort textile (5) pour l'obtention d'un gel,
c) un séchage du renfort textile (5) imbibé du gel obtenu en b).

15. Procédé de préparation selon la revendication 14, **caractérisé en ce que** l'étape a) est réalisée en utilisant ledit au moins un polyélectrolyte cationique hydrosoluble P :
- selon un ratio massique P/(R+F) par rapport auxdits polyhydroxybenzène(s) R et formaldéhyde F, compris entre 2 % et 10 %, et/ou
- selon un ratio massique P/(R+F+W) par rapport auxdits polyhydroxybenzène(s) R, formaldéhyde F et solvant aqueux W, compris entre 0,3 % et 2 %.

16. Procédé de préparation selon l'une des revendications 14 ou 15, **caractérisé en ce que** :
- l'étape a) est réalisée à température ambiante, en dissolvant le(s)dit(s) polyhydroxybenzène(s) R et ledit au moins un polyélectrolyte cationique hydrosoluble P dans ledit solvant aqueux W, de préférence constitué d'eau, puis en ajoutant à la dissolution obtenue ledi formaldéhyde F et ledit catalyseur acide ou basique, avant de verser la solution obtenue sur le renfort textile (5), et que
- l'étape b) est réalisée par cuisson dans un four dudit renfort textile (5) imbibé.

17. Procédé de préparation selon une des revendications 14 à 16, **caractérisé en ce que** l'étape c) est réalisée par un séchage à l'air, par exemple dans une étuve, pour l'obtention dudit gel polymérique organique présentant :
- une surface spécifique comprise entre 400 m²/g et 1200 m²/g, et/ou
- un volume poreux compris entre 0,1 cm³/g et 3 cm³/g, et/ou
- un diamètre moyen de pores compris entre 3 nm et 30 nm, et/ou
- une densité comprise entre 0,01 et 0,4.

## Patentansprüche

1. Biegsames verbundstoffartiges organisches Aerogel (1), das Folgendes aufweist:
- eine textile Verstärkung (5),
- ein organisches Aerogel (3), das im Inneren der textilen Verstärkung (5) angeordnet ist,
**dadurch gekennzeichnet, dass** das organische Aerogel (3) auf einem Harz basiert, welches zumindest teilweise aus (einem) Polyhydroxybenzolmonomer(en) R, das/die aus den Di- oder Trihydroxybenzolen ausgewählt ist/sind und einem Formaldehydmonomer F hervorgeht,
wobei es sich bei dem organischem Aerogel (3) um ein organisches polymerartiges Gel handelt, das mindestens einen wasserlöslichen kationischen Polyelektrolyten P umfasst,
wobei das organische Aerogel (3) eine spezifische Wärmeleitfähigkeit im Bereich von 10 bis 40 mW.m⁻¹.K⁻¹ bei Atmosphärendruck aufweist,
wobei das organische Aerogel (3) das Produkt einer Polymerisationsreaktion von Polyhydroxybenzol (en) R und vom Formaldehyd F in einem wässrigen Lösungsmittel W umfasst, in Gegenwart des mindestens einen wasserlöslichen kationischen Polyelektrolyten P, welcher in dem wässrigen Lösungsmittel aufgelöst ist, und eines Katalysators, wobei das Produkt der Polymerisationsreaktion weiterhin den mindestens einen wasserlöslichen kationischen Polyelektrolyten P gemäß einem Massenanteil im Bereich von 0,2 % bis 2 % umfasst.

2. Biegsames verbundstoffartiges organisches Aerogel (1) nach Anspruch 1,
**dadurch gekennzeichnet, dass** das organisches Aerogel (3) eine Dichte im Bereich von 0,01 bis 0,4 aufweist.

3. Biegsames verbundstoffartiges organisches Aerogel (1) nach einem beliebigen der Ansprüche 1 bis 2, **dadurch gekennzeichnet, dass** es sich bei dem mindestens einen wasserlöslichen kationischen Polyelektrolyten P um ein organisches Polymer handelt, das aus der Gruppe ausgewählt ist, welche aus quartären Ammoniumsalzen, Poly(vinylpyridiniumchlorid), Poly(ethylenimin), Poly(vinylpyridin), Poly(allylaminchlorhydrat), Poly (trimethylammoniumethylmetacrylatchlorid), Poly(acrylamid-co-dimethylammoniumchlorid) und deren Mischungen besteht.

4. Biegsames verbundstoffartiges organisches Aerogel (1) nach dem vorhergehenden Anspruch, **dadurch gekennzeichnet, dass** es sich bei dem mindestens einen wasserlöslichen kationischen Polyelektrolyten P um ein Salz handelt, das Einheiten aufweist, welche aus einem quartären Ammonium hervorgehen, das aus den Poly(diallyldimethylammoniumhalogeniden) ausgewählt ist, wobei es sich vorzugsweise um Poly(diallyldimethylammoniumchlorid) oder Poly(diallyldimethylammoniumbromid) handelt.

5. Biegsames verbundstoffartiges organisches Aerogel (1) nach einem beliebigen der Ansprüche 1 bis 4, **dadurch gekennzeichnet, dass** das Produkt der Polymerisationsreaktion den mindestens einen wasserlöslichen kationischen Polyelektrolyten P, unter Bezugnahme auf das/die Polyhydroxybenzol(e) R und auf Formaldehyd F, gemäß einem Massenverhältnis P/(R+F) umfasst, welches im Bereich von 2 % bis 10 % liegt.

6. Biegsames verbundstoffartiges organisches Aerogel (1) nach einem beliebigen der Ansprüche 1 bis 5, **dadurch gekennzeichnet, dass** das Produkt der Polymerisationsreaktion den mindestens einen wasserlöslichen kationischen Polyelektrolyten P, unter Bezugnahme auf das/die Polyhydroxybenzol(e) R, auf Formaldehyd F und auf das wässrige Lösungsmittel W, gemäß einem Massenverhältnis P/(R+F+W) umfasst, welches im Bereich von 0,3 % bis 2 % liegt.

7. Biegsames verbundstoffartiges organisches Aerogel (1) nach einem beliebigen der vorhergehenden Ansprüche, **dadurch gekennzeichnet, dass** das organische Aerogel (3) Folgendes aufweist:
- eine spezifische Oberfläche im Bereich von 400 m²/g bis 1200 m²/g, und/oder
- ein Porenvolumen im Bereich von 0,1 cm³/g bis 3 cm³/g, und/oder
- einen mittleren Porendurchmesser im Bereich von 3 nm bis 30 nm.

8. Biegsames verbundstoffartiges organisches Aerogel (1) nach einem beliebigen der vorhergehenden Ansprüche, **dadurch gekennzeichnet, dass**, wenn es sich bei dem organischen Aerogel (3) um ein organisches polymerartiges Gel handelt, welches mindestens einen wasserlöslichen kationischen Polyelektrolyten P umfasst, die textile Verstärkung (5) mittels organischer Fasern hergestellt wird, deren Feuchtigkeitswiederaufnahme sich auf einen Anteil von mindestens 5 % beläuft und die eine gute chemische Affinität zu dem organischen Aerogel (3) aufweisen.

9. Biegsames verbundstoffartiges organisches Aerogel (1) nach dem vorhergehenden Anspruch, **dadurch gekennzeichnet, dass** die organischen Fasern oder Filamente der textilen Verstärkung (5) aus den folgenden Materialien ausgewählt sind:
- einer Faser aus meta-Aramid,
- einer Faser aus oxidiertem Polyacrylnitril,
- einer Faser aus Polyamidimid,
- einer phenolbasierten Faser,
- einer Faser aus Polybenzimidazol,
- einer Faser aus Polysulfonamid.

10. Biegsames verbundstoffartiges organisches Aerogel (1) nach Anspruch 8,
**dadurch gekennzeichnet, dass** die anorganischen Fasern oder Filamente der textilen Verstärkung 5 aus den folgenden Materialien ausgewählt sind:
- Glasfasern,
- Basaltfasern,
- Keramikfasern,
- Siliciumdioxidfasern,
- Siliciumcarbidfasern.

11. Biegsames verbundstoffartiges organisches Aerogel (1) nach einem der Ansprüche 8 bis 10, **dadurch gekennzeichnet, dass** es sich bei der textilen Verstärkung (5) um einen Vliesstoff handelt.

12. Biegsames verbundstoffartiges organisches Aerogel (1) nach einem der Ansprüche 8 bis 10, **dadurch gekennzeichnet, dass** es sich bei der textilen Verstärkung (5) um einen Webstoff handelt.

13. Biegsames verbundstoffartiges organisches Aerogel (1) nach einem der Ansprüche 8 bis 12, **dadurch gekennzeichnet, dass** es sich bei der textilen Verstärkung (5) um einen dreidimensionalen Textilstoff handelt.

14. Verfahren zur Herstellung eines biegsamen verbundstoffartigen organischen Aerogels (1), **dadurch gekennzeichnet, dass** es die folgenden Schritte umfasst:
a) eine Polymerisation, in einem wässrigen Lösungsmittel W, von (einem) Polyhydroxybenzolmonomer(en) R, das/die aus den Di- oder Trihydroxybenzolen ausgewählt ist/sind, und von Formaldehyd F, in Gegenwart mindestens eines kationischen Polyelektrolyten P, welcher in dem wässrigen Lösungsmittel W aufgelöst ist, und eines Katalysators, im Inneren einer textilen Verstärkung (5), wobei der kationische Polyelektrolyt P gemäß einem Massenanteil in der Zusammensetzung verwendet wird, welcher im Bereich von 0,2 % bis 2 % liegt.
b) eine Gelbildung ausgehend von der Lösung, wie sie unter a) erhalten wurde, im Innerem der textilen Verstärkung (5), um ein Gel zu erhalten,
c) ein Trocknen der textilen Verstärkung (5), welche mit dem Gel durchtränkt ist, wie es unter b) erhalten wurde.

15. Herstellungsverfahren nach Anspruch 14, **dadurch gekennzeichnet, dass** der Schritt a) derart durchgeführt wird, dass der mindestens eine wasserlösliche kationische Polyelektrolyt P folgendermaßen verwendet wird:
- gemäß einem Massenverhältnis P/(R+F), unter Bezugnahme auf die/das Polyhydroxybenzol(e) R und auf Formaldehyd F, im Bereich von 2 % bis 10 %, und/oder
- gemäß einem Massenverhältnis P/(R+F+W), unter Bezugnahme auf die/das Polyhydroxybenzol(e) R, auf Formaldehyd F und auf das wässrige Lösungsmittel W, im Bereich von 0,3 % bis 2 %.

16. Herstellungsverfahren nach einem der Ansprüche 14 oder 15, **dadurch gekennzeichnet, dass**:
- der Schritt a) bei Umgebungstemperatur durchgeführt wird, indem das/die Polyhydroxybenzol(e) R und der mindestens eine wasserlösliche kationische Polyelektrolyt P in dem wässrigen Lösungsmittel W aufgelöst werden, welches vorzugsweise aus Wasser besteht, woraufhin der erhaltenen Lösung das Formaldehyd F und der saure oder basische Katalysator zugesetzt werden, um anschließend die erhaltene Lösung auf die textile Verstärkung (5) zu geben, und dass
- der Schritt b) durchgeführt wird, indem die durchtränkte textile Verstärkung (5) in einem Ofen wärmebehandelt wird.

17. Herstellungsverfahren nach einem der Ansprüche 14 bis 16, **dadurch gekennzeichnet, dass** der Schritt c) durch eine Trocknung an der Luft, beispielsweise in einem Trockenschrank, durchgeführt wird, um das organische polymerartige Gel zu erhalten, welches Folgendes aufweist:
- eine spezifische Oberfläche im Bereich von 400 m²/g bis 1200 m²/g, und/oder
- ein Porenvolumen im Bereich von 0,1 cm³/g bis 3 cm³/g, und/oder
- einen mittleren Porendurchmesser im Bereich von 3 nm bis 30 nm, und/oder
- eine Dichte im Bereich von 0,01 bis 0,4.

## Claims

1. Flexible composite organic aerogel (1) comprising:
- a textile reinforcement (5),
- an organic aerogel (3) placed within said textile reinforcement (5),
**characterized in that** said organic aerogel (3) is based on a resin resulting at least in part from polyhydroxybenzene monomer(s) R selected from di- or trihydroxybenzenes and from a formaldehyde monomer F, said organic aerogel (3) being an organic polymer gel comprising at least one water-soluble cationic polyelectrolyte P,
said organic aerogel (3) having a specific thermal conductivity of between 10 and 40 mW.m⁻¹.K⁻¹ at atmospheric pressure,
the organic aerogel (3) comprising the product of a polymerization reaction in an aqueous solvent W of polyhydroxybenzene(s) R and of formaldehyde F, in the presence of at least one water-soluble cationic polyelectrolyte P dissolved in said aqueous solvent and in the presence of a catalyst, and wherein the product of the polymerization reaction comprises said at least one water-soluble cationic polyelectrolyte P in a mass fraction of between 0.2% and 2%.

2. Flexible composite organic aerogel (1) according to Claim 1, **characterized in that** the organic aerogel (3) has a density of between 0.01 and 0.4.

3. Flexible composite organic aerogel (1) according to either one of Claims 1 and 2, **characterized in that** said at least one water-soluble cationic polyelectrolyte P is an organic polymer selected from the group consisting of quaternary ammonium salts, poly(vinylpyridinium chloride), polyethyleneimine, polyvinylpyridine, poly(allylamine hydrochloride), poly(trimethylammonioethyl methacrylate chloride), poly(acrylamide-co-dimethylammonium chloride) and mixtures thereof.

4. Flexible composite organic aerogel (1) according to the preceding claim, **characterized in that** said at least one water-soluble cationic polyelectrolyte P is a salt comprising units resulting from a quaternary ammonium selected from poly(diallyldimethylammonium halide)s and is preferably poly(diallyldimethylammonium chloride) or poly(diallyldimethylammonium bromide).

5. Flexible composite organic aerogel (1) according to any one of Claims 1 to 4, **characterized in that** said product of the polymerization reaction comprises said at least one water-soluble cationic polyelectrolyte P in a mass ratio P/(R+F), relative to said polyhydroxybenzene(s) R and formaldehyde F, that is between 2% and 10%.

6. Flexible composite organic aerogel (1) according to any one of Claims 1 to 5, **characterized in that** said product of the polymerization reaction comprises said at least one water-soluble cationic polyelectrolyte P in a mass ratio P/(R+F+W), relative to said polyhydroxybenzene(s) R, formaldehyde F and aqueous solvent W, that is between 0.3% and 2%.

7. Flexible composite organic aerogel (1) according to any one of the preceding claims, **characterized in that** the organic aerogel (3) has:
- a specific surface area of between 400 m²/g and 1200 m²/g, and/or
- a pore volume of between 0.1 cm³/g and 3 cm³/g, and/or
- an average pore diameter of between 3 nm and 30 nm.

8. Flexible composite organic aerogel (1) according to any one of the preceding claims, **characterized in that**, when the organic aerogel (3) is an organic polymer gel comprising at least one water-soluble cationic polyelectrolyte P, the textile reinforcement (5) is produced by means of organic fibres having a moisture uptake level of greater than or equal to 5% and having a good chemical affinity for said organic aerogel (3).

9. Flexible composite organic aerogel (1) according to the preceding claim, **characterized in that** the organic fibres or filaments of the textile reinforcement (5) are selected from the following materials:
- meta-aramid fibre,
- oxidized polyacrylonitrile fibre,
- polyamide-imide fibre,
- phenolic fibre,
- polybenzimidazole fibre,
- polysulfonamide fibre.

10. Flexible composite organic aerogel (1) according to Claim 8, **characterized in that** the inorganic fibres or filaments of the textile reinforcement (5) are selected from the following materials:
- glass fibre,
- basalt fibre,
- ceramic fibre,
- silica fibre,
- silicon carbide fibre.

11. Flexible composite organic aerogel (1) according to one of Claims 8 to 10, **characterized in that** the textile reinforcement (5) is a nonwoven textile.

12. Flexible composite organic aerogel (1) according to one of Claims 8 to 10, **characterized in that** the textile reinforcement (5) is a woven textile.

13. Flexible composite organic aerogel (1) according to one of Claims 8 to 12, **characterized in that** the textile reinforcement (5) is a three-dimensional textile.

14. Method for the production of a flexible composite organic aerogel (1), **characterized in that** it comprises the following steps:
a) polymerization in an aqueous solvent W of polyhydroxybenzene monomer(s) R selected from di- or trihydroxybenzenes and formaldehyde F, in the presence of at least one cationic polyelectrolyte P dissolved in said aqueous solvent W and in the presence of a catalyst, within a textile reinforcement (5), said cationic polyelectrolyte P being employed in a mass fraction in the composition of between 0.2% and 2%.
b) gelling of the solution obtained in a) within the textile reinforcement (5) in order to obtain a gel,
c) drying of the textile reinforcement (5) impregnated with the gel obtained in b).

15. Method of preparation according to Claim 14, **characterized in that** step a) is carried out using said at least one water-soluble cationic polyelectrolyte P:
- in a mass ratio P/(R+F), relative to said polyhydroxybenzene(s) R and formaldehyde F, of between 2% and 10%, and/or
- in a mass ratio P/(R+F+W), relative to said polyhydroxybenzene(s) R, formaldehyde F and aqueous solvent W, of between 0.3% and 2%.

16. Method of preparation according to either of Claims 14 and 15, **characterized in that**:
- step a) is carried out at ambient temperature, by dissolving said polyhydroxybenzene(s) R and said at least one water-soluble cationic polyelectrolyte P in said aqueous solvent W, preferably composed of water, and then adding to the solution obtained said formaldehyde F and said acidic or basic catalyst, before pouring the solution obtained onto the textile reinforcement (5), and that
- step b) is carried out by curing said impregnated textile reinforcement (5) in an oven.

17. Method of preparation according to one of Claims 14 to 16, **characterized in that** step c) is carried out by drying in air, for example in a drying oven, in order to obtain said organic polymer gel having:
- a specific surface area of between 400 m²/g and 1200 m²/g, and/or
- a pore volume of between 0.1 cm³/g and 3 cm³/g, and/or
- an average pore diameter of between 3 nm and 30 nm, and/or
- a density of between 0.01 and 0.4.
